# EUROPÄISCHE PATENTSCHRIFT

(11) **EP 1 247 021 B1**
(45) Veröffentlichungstag und Bekanntmachung des Hinweises auf die Patenterteilung: **28.04.2004**
(21) Anmeldenummer: 00991627.1
(22) Anmeldetag: 22.12.2000
(51) Int. Cl.: F03D 1/00

(54) **GLEITLAGER UND WINDENERGIEANLAGE MIT EINEM SOLCHEN GLEITLAGER**
PLAIN BEARING AND WIND ENERGY UNIT WITH SAID BEARING
PALIER A GLISSEMENT ET EOLIENNE EQUIPEE DE CE DERNIER

(30) Priorität: 24.12.1999 DE 19962978
(43) Veröffentlichungstag der Anmeldung: 09.10.2002
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2000/013166
(87) Internationale Veröffentlichungsnummer: WO 2001/048376

(56) Entgegenhaltungen:
- EP-A- 0 821 161
- DE-A- 4 432 800
- DE-A- 19 510 182
- DE-A- 19 645 581
- DE-C- 19 629 168
- DE-U- 29 806 010
- GB-A- 2 177 374
- RU-C- 2 054 578
- US-A- 5 937 734

## Beschreibung

Die Erfindung betrifft ein Gleitlager für die Übertragung hoher Axialkräfte und großer Biegemomente bei geringen Relativbewegungen zwischen den Lagerpartnern sowie eine Windenergieanlage mit einem solchen Gleitlager zwischen ihrem turmgestützten Maschinenkopf und dem Turmkopf.

Gleitläger mit dem vorstehend angegebenen Anforderungsprofil können beispielsweise als Schwenklager bei Kränen, bestimmten Vergnügungsanlagen und eben Windenergieanlagen (als sog. Azimutlater) Verwendung finden. Ein konstruktives Problem ergibt sich dabei aus der Tatsache, dass auch im Falle einer vertikalen Drehachse die Kräfte sowohl im Auflast- als auch im Abhebesinne vom Lager aufgenommen werden müssen.

Aus der RU 2 054 578 C ist ein derartiges Gleitlager bekannt, das für den Einsatz als Azimutlager einer Windenergieanlage bestimmt ist, bei dem eine an einem Lagerpartner angeordnete Ringrippe in eine am anderen Lagerpartner vorgesehene Ringnut eingreift, und wobei die Ringrippe auf ihren freien Seitenflächen und ggf. Umfangsflächen mit Gleitbelägen versehen ist. Bei diesem Stand der Technik ist jedoch nicht das Problem gelöst, Beschädigungen oder Verschleiß der Gleitbeläge auf möglichst einfache und kostengünstige Weise Rechnung zu tragen. Dabei ist zu berücksichtigen, dass namentlich Beschädigungen nur einen bestimmten Bereich der Gleitbeläge betreffen können.

Zur Lösung dieses Problems sieht die Erfindung vor, die Gleitbeläge segmentartig zu unterteilen und mit der sie tragenden Rippe fest, aber lösbar zu verbinden. Dies erlaubt die Inspektion der Gleitbeläge und nötigenfalls deren Auswechseln im Betrieb. Es können auch einzelne Segmente ausgewechselt werden. Die Gleitbelagselemente bestehen vorzugsweise aus einem Metallkunststoffverbund mit einem Stahlrücken und (genoppter) Acetat-Copolymer-Lauffläche.

Es kann dann weiter vorgesehen werden, dass auch einer der Lagerpartner segmentartig unterteilt ist und die Segmente einzeln aus ihrem Verbund lösbar sind. Insbesondere kann die mit den Gleitbelägen belegte Ringrippe in Segmente unterteilt und so ausgebildet/angeordnet sein, dass sie von radial außen in die innen liegende Ringnut eingreift. Dann können die Ringrippen-Segmente mit den daran befestigten Gleitbelag-Segmenten nach und nach (in Umfangsrichtung) aus ihrem Verbund und ihrer Befestigung am tragenden bzw. abgestützten Bauteil gelöst und radial auswärts herausgezogen sowie nach dem Bestücken mit neuen Gleitbelag-Segmenten wieder eingesetzt werden. Selbstverständlich ist auch der Austausch gegen ein mit neuen Gleitbelag-Segmenten versehenes Rippen-Ersatzteil möglich.

Natürlich können alle Anordnungen auch jeweils umgekehrt getroffen werden. So können die Gleitbeläge auch an den Innenflächen der segmentartig unterteilten Ringnut angeordnet sein, welche die innen liegende Ringrippe von außen übergreift. Überdies kann das jeweils innen liegende Bauteil (Ringrippe oder Ringnut) in Segmente unterteilt sein. Dann ist allerdings die nach außen divergierende Keilform der Segmente ihrem Herausziehen nach innen hinderlich. Daher sind in diesem Falle die Segmente parallel zu beranden, und es sind gegebenenfalls Ausgleichselemente zwischen den die Gleitbeläge tragenden Segmenten vorzusehen.

Um das Auswechseln der Segmente zu erleichtern, kann man kraftbetriebene Mittel wie beispielsweise pneumatisch oder hydraulisch beaufschlagte Kolben/Zylinder-Einheiten zwischen den Lagerpartnem vorsehen, die lediglich im stationären Zustand an diesen gleichzeitig angreifen und in der Lage sind, den aufliegenden Lagerpartner gegenüber dem tragenden zu lüften, so dass die Befestigung der Segmente gelöst und diese herausgenommen werden können. Nach deren Wiedereinsetzen wird die Befestigung der Entlastungsmittel zumindest an einem der Lagerpartner wieder gelöst.

In ihrem spezifischen Aspekt erfasst die Erfindung femer eine Windenergieanlage mit einem Gleitlager der vorstehend beschriebenen Art zwischen einem turmgestützten Maschinenkopf und dem Turmkopf, wobei zwischen dem Turmkopf und dem Maschinenkopf ein Nachführantrieb zur windrichtungsabhängigen Drehung des Maschinenkopfes um die vertikale Turmachse vorgesehen ist, und wobei das Gleitlager als Azimutlager zur Führung des Maschinenkopfes in radialer sowie axialer Richtung ausgebildet ist. Ein Gleitlager ist wesentlich besser als etwa eine Kugeldrehverbindung geeignet, hohe Kräfte bei geringen Bewegungen aufzunehmen. Es kommt hinzu, dass die Gleitreibung im Lager eine Art natürliche Dämpfung allzu hektischer Nachführbewegungen bewirkt, weil die Haftreibung, welche dem Beginn einer Nachführbewegung entgegengesetzt wird, im wesentlichen unabhängig von der Materialpaarung stets größer ist als die nach ihrer Überwindung einsetzende Gleitreibung. Dadurch wird die Nachführung bei kurzzeitigen und/oder geringfügigen Windrichtungswechseln gänzlich unterdrückt.

In der Windenergieanlage kann das Gleitlager in axialer Richtung auftretende Vertikalkräfte sowohl im Auflast- als auch im Abhebesinne aufnehmen. Die Gleitbeläge können mit der Ringrippe sowohl verstiftet als auch verklebt sein. Für die Inspektion der Gleitbeläge und damit des Drehlagers und nötigenfalls das Auswechseln der Gleitbeläge bzw. der Lagerpartner-Segmente ist bevorzugt mindestens eine verschließbare (beispielsweise durch einen Stopfen verschließbare) Wartungsöffnung im Maschinenkopf-Flansch vorgesehen; durch Drehen des Maschinenkopfes kann das gesamte Drehlager abgefahren und gewartet werden.

Die Schmierung des Gleitlagers erfolgt mittels Dauerschmierpatronen von unten nach oben; Altfett wird auf der Oberseite des Lagers nach außen abgegeben und aufgefangen. Zu diesem Zweck ist unterhalb der Ringnut, in welche die Ringrippe mit den Gleitbelägen eingreift, eine umlaufende Dichtung in den Maschinenkopf-Flansch eingelassen, die den Spalt gegenüber dem Turmkopf-Flansch abdichtet. Oberseitig ist ein Dichtungsstreifen oberhalb der Ringnut derart am Maschinenkopf-Flansch befestigt, dass er mit seinem freien Bereich auf der Oberseite des Turmkopf-Flansches aufliegt.

Die Zeichnung veranschaulicht die Erfindung an Ausführungsbeispielen. Darin zeigt:
- Fig. 1: im schematischen Querschnitt ein erfindungsgemäßes Gleitlager in einer allgemeinen Form;
- Fig. 2: in verkleinertem Maßstab eine Draufsicht auf den segmentierten Außenring mit der radial einwärts gerichteten Ringrippe des Gleitlagers in Fig. 1;
- Fig. 3: einen Querschnitt durch das Maschinenkopf-Gehäuse einer turmgestützten Windenergieanlage mit dem Maschinenkopf-Flansch und das obere Ende des Turms mit dem Turmkopf-Flansch in separiertem Zustand des Gleitlagers;
- Fig. 4: in etwas vergrößertem Maßstab eine der Fig. 3 im wesentlichen entsprechende Darstellung im zusammengesetzten Zustand;
- Fig. 5: eine vergrößerte Ausschnittsdarstellung des Lagerquerschnitts (Kreisausschnitt "X" in Fig. 4); und
- Fig. 6: eine schematische Draufsicht auf einen Teil des Maschinenkopfs mit dem Nachführantrieb.

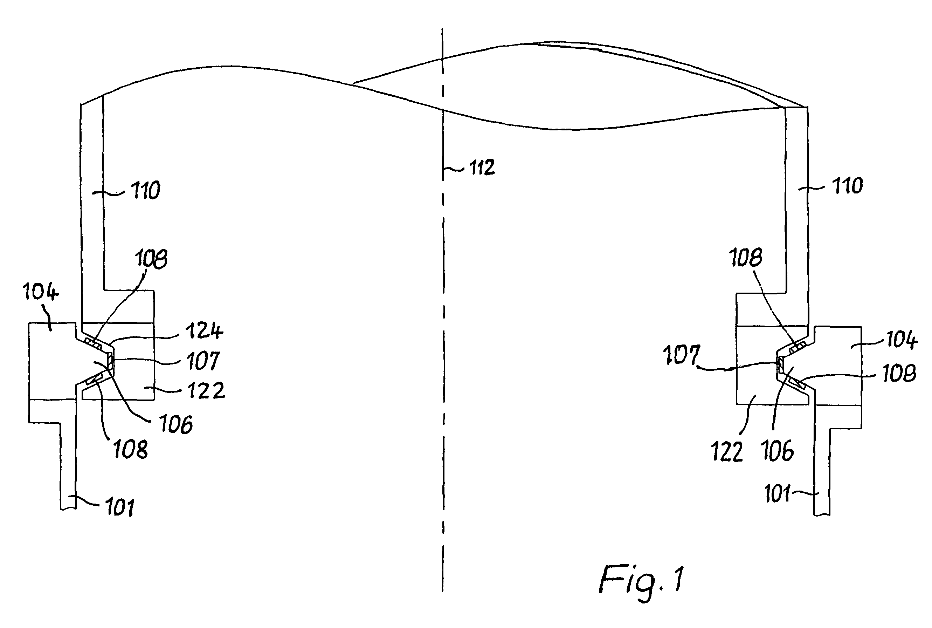

Fig. 1 zeigt schematisch die Ausbildung und Anordnung eines erfindungsgemäßen Gleitlagers mit einem Außenring 104, der auf einem nicht näher dargestellten Stützgerüst 101 befestigt ist. Radial einwärts setzt sich der Außenring 104 in einer Ringrippe 106 fort, welche einen trapezförmigen, sich radial einwärts verjüngenden Querschnitt aufweist. Die im wesentlichen nach oben und unten weisenden Seitenflächen der Ringrippe 106 sind mit Gleitbelägen in Form von Gleitbelag-Segmenten 108 belegt, die an der Ringrippe beispielsweise durch Stifte oder durch Verkleben fest, aber lösbar angebracht sind. Gleiches gilt für Gleitbelag-Segmente 107, welche an der inneren Umfangsfläche der Ringrippe 106 angeordnet sind.

Die Ringrippe 106 mit ihren Gleitbelag-Segmenten 107, 108 greift in einen Innenring 122 ein, welcher Teil eines um die Achse 112 drehbaren Aufbaus 110 ist und mit dem Außenring 104 das Gleitlager bildet.

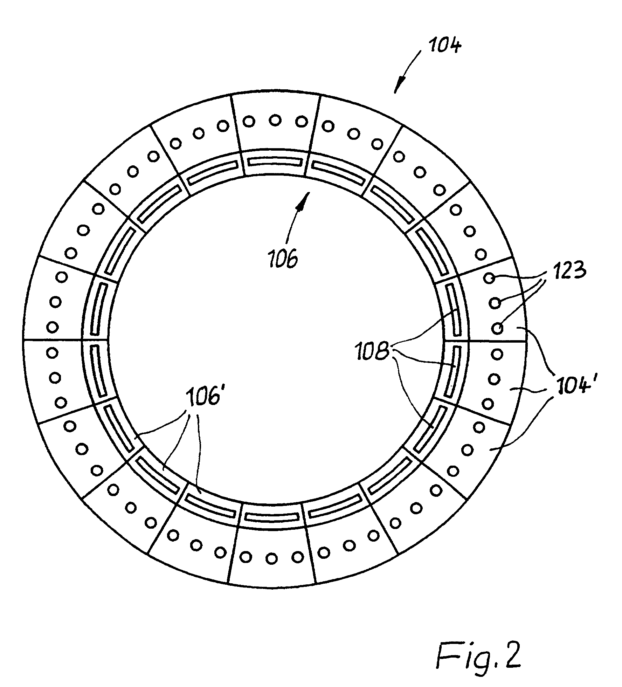

Fig. 2 veranschaulicht, dass und wie der Außenring 104 in Segmente 104' unterteilt ist, welche mittels Schrauben 123 am Stützgerüst 101 befestigt sind. Die seitliche Relativausrichtung der Segmente 104' kann zusätzlich durch Nut/Feder-Verbindungen o. dgl. gesichert sein. Auf den Rippenabschnitten 106' der Ringrippe 106 sind die Gleitbelag-Segmente 108 erkennbar, welche im Falle des Verschleißes oder anderweitiger Wartung zusammen mitden Außenring-Segmenten 104 herausgenommen werden können. Dieser Vorgang lässt sich dadurch erleichtern, dass (nicht dargestellte) kraftbetriebene Hebemittel zwischen dem Stützgerüst 101 und dem Lagerinnenring 122 (Fig. 1) angeordnet werden, die nur im stationären Zustand den Aufbau 110 zu lüften in der Lage sind und auf diese Weise das Lösen der Schraubverbindungen 123 sowie das radial auswärts gerichtete Herausnehmen einzelner Segmente 104' erlauben.

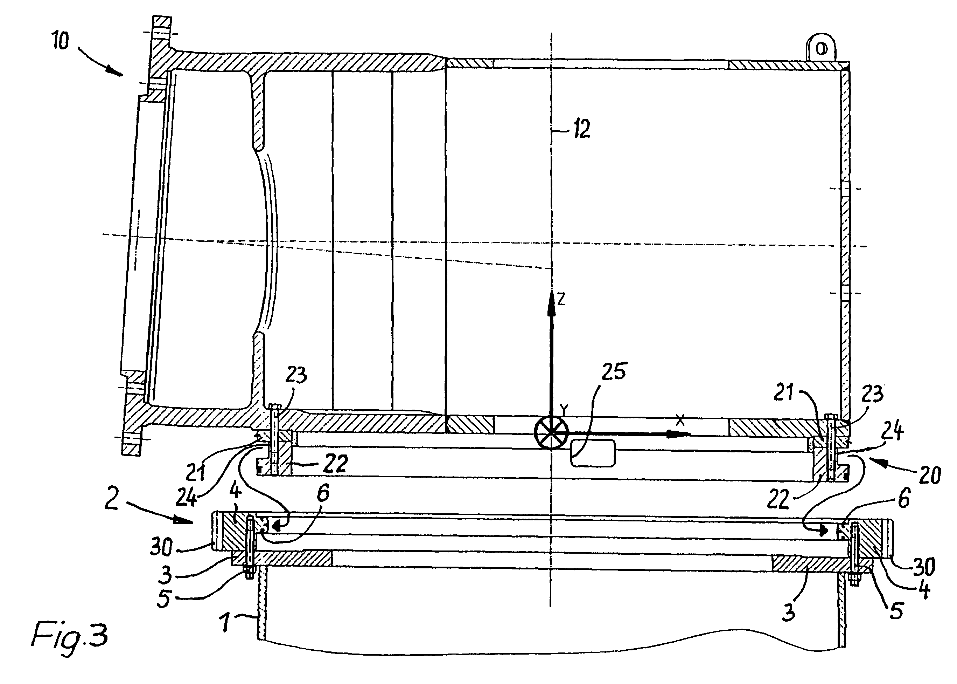

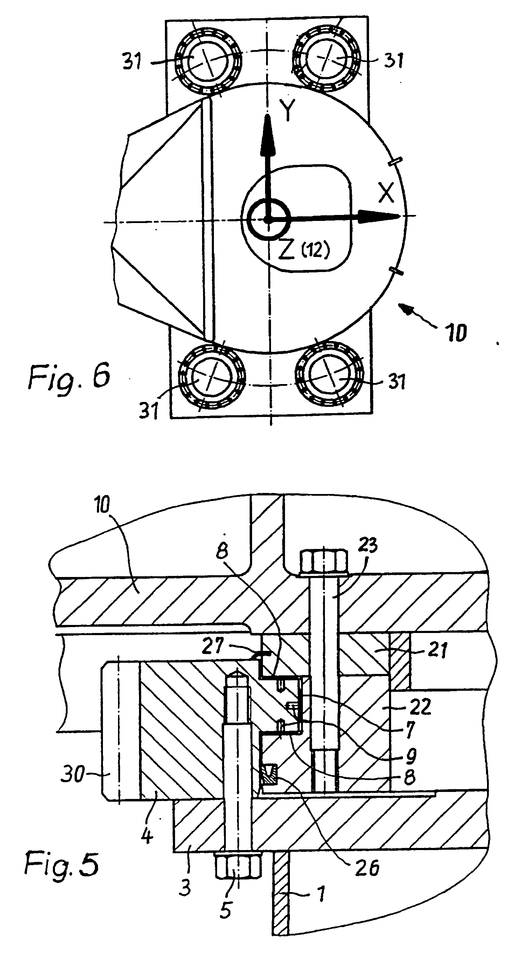

Die Fig. 3 - 6 zeigen die Verwendung eines erfindungsgemäßen Gleitlagers zwischen dem Turm und dem Maschinenkopf einer Windenergieanlage. Am oberen Ende des tragenden Turmes 1 ist ein Turmkopf-Flansch 2 befestigt, der aus einem Flanschring 3 und einem Lageraußenring 4 besteht; die Teile 3 und 4 sind durch Schrauben 5 miteinander verbunden. Die Außenseite des Lageraußenrings 4 ist mit einer Außenverzahnung 30 versehen, in welche die Ritzel von Getriebemotoren 31 (Fig. 6) eingreifen und auf diese Weise den Nachführantrieb bilden.
Das Maschinenkopfgehäuse 10 hat in üblicher Weise eine Aufnahme 11 für den - nicht dargestellten - Rotor und umschließt in seinem Innern die - ebenfalls nicht dargestellten - mechanischen und elektrischen Aggregate der Windenergieanlage. Unterseitig ist am Maschinenkopfgehäuse 10 ein Maschinenkopf-Flansch 20 befestigt, der aus einem Ring 21 und einem Lagerinnenring 22 besteht. Die Teile 21 und 22 sind untereinander als auch mit dem Maschinenkopfgehäuse 10 mittels Schrauben 23 verbunden.

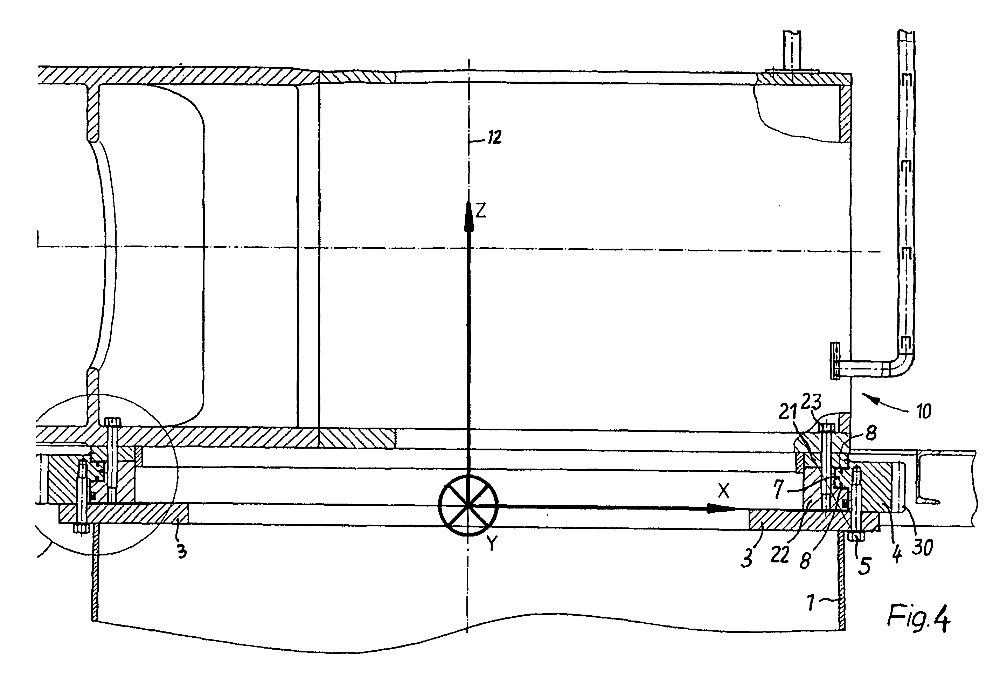

Im Lagerinnenring 22 ist außenseitig eine Ringnut 24 vorgesehen, die teilweise vom Ring 21 berandet wird. In diese greift im zusammengebauten Zustand (Fig. 4) eine innenseitig am Lageraußenring 4 des Turmkopf-Flansches 2 vorgesehene Ringrippe 6 ein, welche mit teilzylindrischen Gleitbelagsegmenten 7 für die Radialführung und oberseitig wie unterseitig mit Kreisring-Gleitbelagsegmenten 8 für die Vertikalführung versehen ist. Die Gleitbelagsegmente 7, 8 sind mit den entsprechenden Flächen der Ringrippe 6 verklebt und außerdem mit Stiften 9 befestigt (Fig. 5). In zur Turmachse 12 achsparalleler Richtung ist die Dicke der Ringrippe 6 (einschließlich der Gleitbelagsegmente 8) geringfügig kleiner als die lichte Weite der Ringnut 24, so dass je nach Richtung der Vertikalkraft entweder die oberen oder die unteren Gleitbelagsegmente an den zugehörigen Wandungen der Ringnut 24 anliegen.

Im Maschinenkopf-Flansch 20 ist eine Wartungsöffnung 25 vorgesehen, welche auch im zusammengebauten Zustand und beim Betrieb der Windenergieanlage eine Inspektion und gegebenenfalls Wartung oder Auswechslung der Gleitbelagsegmente 7, 8 ermöglicht. Ferner ist in den Lagerinnenring 22 unterhalb der Ringnut 24 eine Dichtung 26 eingelassen, welche mit der entsprechenden Fläche des Lageraußenrings 4 zusammenwirkt (Fig. 5). Eine in den Ring 21 eingelassene Lippendichtung 27 liegt auf der Oberseite des Lageraußenrings 4 als Teil des Turmkopf-Flansches 2 auf.

Der Nachführantrieb wird - wie oben schon angedeutet - von vier Elektromotoren 31 gebildet, welche in die Verzahnung 30 des Lageraußenringes 4 mit ihren Ritzeln eingreifen (Fig. 6).

## Patentansprüche

1. Gleitlager für die Übertragung hoher Axialkräfte und großer Biegemomente bei geringen Relativbewegungen zwischen den Lagerpartnern, bei dem eine an einem Lagerpartner (4; 104) angeordnete Ringrippe (6; 106) In eine am anderen Lagerpartner (22; 122) vorgesehene Ringnut (24; 124) eingreift, und die Ringrippe (6; 106) auf ihren freien Seitenflächen und ggf. Umfangsflächen mit Gleitbelägen (7, 8;107, 108) versehen ist,
**dadurch gekennzeichnet, dass** die Gleitbeläge (7, 8; 107, 108) segmentartig unterteilt und mit der Rippe (6; 106) fest, aber lösbar verbunden sind.

2. Gleitlager nach Anspruch 1,
**dadurch gekennzeichnet, dass** die Ringrippe (6; 106) einen auswärts konvergierenden trapezförmigen Querschnitt hat.

3. Gleitlager nach Anspruch 1 oder 2,
**dadurch gekennzeichnet, dass** die Gleitbelagsegmente (7, 8; 107, 108) aus einem Metallkunststoffverbund mit einem Stahlrücken und (genoppter) Acetal-Copolymer-Lauffläche bestehen.

4. Gleitlager nach mindestens einem der vorstehenden Ansprüche,
**dadurch gekennzeichnet, dass** auch einer der Lagerpartner (4; 104) segmentartig unterteilt ist und die Segmente (104') einzeln aus ihrem Verbund lösbar sind.

5. Gleitlager nach Anspruch 4,
**dadurch gekennzeichnet, dass** die mit den Gleitbelägen (7, 8; 107, 108) belegte Ringrippe (6; 106) in Segmente (106') unterteilt ist und von radial außen in die innenliegende Ringnut (24; 124) eingreift.

6. Windenergieanlage mit einem Gleitlager nach mindestens einem der vorstehenden Ansprüche zwischen einem turmgestützten Maschinenkopf (10) und dem Turmkopf (1), wobei zwischen dem Turmkopf und dem Maschinenkopf ein Nachführantrieb (30, 31) zur windrichtungsabhängigen Drehung des Maschinenkopfes um die vertikale Turmachse vorgesehen ist, und wobei das Gleitlager zur Führung des Maschinenkopfes (10) in radialer sowie axialer (Turmachse 12) Richtung ausgebildet ist.

7. Windenergieanlage Anspruch 6,
**dadurch gekennzeichnet, dass** In achsparalleler Richtung die Gesamtdicke der Ringrippe (6) (einschließlich der Gleitbelagsegmente 8) geringfügig kleiner als die lichte Weite der Ringnut (24) ist.

8. Windenergieanlage nach Anspruch 6 oder 7,
**dadurch gekennzeichnet, dass** in dem den einen Lagerpartner bildenden Maschinenkopf-Flansch (20) mindestens eine verschließbare Wartungsöffnung (25) vorgesehen ist.

9. Windenergieanlage nach einem der Ansprüche 6 bis 8,
**dadurch gekennzeichnet, dass** ortsfeste kraftbetriebene Mittel zum Entlasten (Lüften) der Lagerpartner (4, 22; 104, 122) im stationären Zustand beim Auswechseln der Segmente (104', 106') vorgesehen sind.

## Claims

1. Plain bearing for the transmission of high axial forces and large bending torques with small relative movements between the bearing partners, in which an annular rib (6; 106) which is arranged on one bearing partner (4; 104) engages in an annular groove (24; 124) which is provided on the other bearing partner (22; 122), and the annular rib (6; 106) is provided on its free side surfaces and possibly circumferential surfaces with sliding facings (7, 8; 107, 108),
**characterized in that** the sliding facings (7, 8; 107, 108) are subdivided like segments, and are firmly but detachably connected to the rib (6; 106).

2. Plain bearing according to Claim 1,
**characterized in that** the annular rib (6; 106) has an outwards-convergent trapezoidal cross section.

3. Plain bearing according to Claim 1 or 2,
**characterized in that** the sliding facing segments (7, 8; 107, 108) are composed of a metal plastic composite with a steel rear and a (studded) acetal copolymer running surface.

4. Plain bearing according to at least one of the preceding claims,
**characterized in that** one of the bearing partners (4; 104) is also subdivided like segments, and the segments (104') can be detached individually from their composite assembly.

5. Plain bearing according to Claim 4,
**characterized in that** the annular rib (6; 106) which has the sliding facings (7, 8; 107, 108) is subdivided into segments (106') and engages radially from the outside in the internal annular groove (24; 124).

6. Wind energy installation having a plain bearing according to at least one of the preceding claims between a machine head (10), which is supported on a pylon, and the pylon head (1), with a follow-up drive (30, 31) being provided between the pylon head and the machine head in order to rotate the machine head as a function of the wind direction about the vertical pylon axis, and with the plain bearing being designed to guide the machine head (10) in the radial and axial (pylon axis 12) direction.

7. Wind energy installation according to Claim 6,
**characterized in that** the overall thickness of the annular rib (6) (including the sliding facing segments 8) in the direction parallel to the axis is slightly less than the unobstructed width of the annular groove (24).

8. Wind energy installation according to Claim 6 or 7,
**characterized in that** at least one maintenance opening (25), which can be closed, is provided in the machine head flange (20) which forms one of the bearing partners.

9. Wind energy installation according to one of Claims 6 to 8,
**characterized in that** fixed-position, power-operated means are provided for reducing the load (venting) on the bearing partners (4, 22; 104, 122) in the stationary state during replacement of the segments (104', 106').

## Revendications

1. Palier à glissement pour le transfert de forces axiales élevées et de couples de flexion importants en cas de mouvements relatifs faibles entre les couples d'appui, dans lequel une nervure annulaire (6 ; 106) disposée sur un couple d'appui (4 ; 104) s'engrène dans une rainure pour anneau de retenue (24 ; 124) prévue sur l'autre couple d'appui (22 ; 122) et dans lequel la nervure annulaire (6 ; 106) est dotée de revêtements de glissière (7, 8 ; 107, 108) sur ses côtés libres et à sa périphérie le cas échéant, **caractérisé en ce que** les revêtements de glissière (7, 8 ; 107, 108) sont divisés en segments et reliés fixement, mais de manière amovible, à la nervure (6 ; 106).

2. Palier à glissement selon la revendication 1, **caractérisé en ce que** la nervure annulaire (6 ; 106) comporte une section transversale trapézoïdale convergeant vers l'extérieur.

3. Palier à glissement selon la revendication 1 ou 2, **caractérisé en ce que** les segments du palier à glissement (7, 8 ; 107, 108) se composent d'un composite métal/plastique dont le dos est en acier et la surface de roulement (noppée) en copolymère acétal.

4. Palier à glissement selon au moins l'une des revendications précédentes, **caractérisé en ce que** l'un des couples d'appui (4 ; 104) est lui aussi divisé en segments et **en ce que** les segments (104') peuvent être séparés individuellement de leur composite.

5. Palier à glissement selon la revendication 4, **caractérisé en ce que** la nervure annulaire (6 ; 106) recouverte des revêtements de glissière (7, 8 ; 107, 108) se divise en segments (106') et s'engrène par le côté extérieur radial dans la rainure pour anneau de retenue (24 ; 124) située à l'intérieur.

6. Eolienne équipée d'un palier à glissement selon au moins l'une des revendications précédentes entre une tête de machine (10) appuyée sur la tour et la tête de la tour (1), un système orienteur (30, 31) étant prévu entre la tête de la tour et la tête de la machine afin de faire tourner en fonction de la direction du vent la tête de la machine autour de l'axe vertical de la tour et le palier à glissement étant formé pour guider la tête de la machine (10) aussi bien dans la direction radiale que dans la direction axiale (axe de la tour 12).

7. Eolienne selon la revendication 6, **caractérisée en ce que** l'épaisseur totale de la nervure annulaire (6) (y compris celle des segments des revêtements de glissière 8) est légèrement inférieure à l'espace ouvert de la rainure pour anneau de retenue (24) dans la direction parallèle à l'axe.

8. Eolienne selon la revendication 6 ou 7, **caractérisée en ce que** la bride de la tête de la machine (20) formant l'un des couples d'appui est dotée d'au moins un orifice d'entretien (26) refermable.

9. Eolienne selon l'une quelconque des revendications 6 à 8, **caractérisée en ce que** des moyens mécaniques fixes servant à décharger (aérer) les couples d'appui (4, 22 ; 104, 122) sont prévus à l'état stationnaire lors de l'échange des segments (104', 106').
